# FASCICULE DE BREVET EUROPEEN

(11) **EP 2 275 592 B1**
(45) Date de publication et mention de la délivrance du brevet: **23.05.2012**
(21) Numéro de dépôt: 10164848.3
(22) Date de dépôt: 03.06.2010
(51) Int. Cl.: D01F 6/60, D01F 6/90

(54) **Textile bacteriostatique à base de polyamide 11**
Bakteriostatische Textilie auf der Basis von Polyamid-11
Bacteriostatic fabric made of polyamide 11

(30) Priorité: 16.06.2009 FR 0954018
(43) Date de publication de la demande: 19.01.2011
(73) Titulaire: Arkema France, 92700 Colombes (FR)
(72) Inventeur: Chhun, Sophie, 94450, Limeil-Brevannes (FR)
(74) Mandataire: Delprat, Corinne

(56) Documents cités:
- US-A- 3 284 233
- US-A- 5 972 463
- US-A1- 2005 255 078

## Description

### Domaine de l'invention

La présente invention a pour objet un matériau textile bactériostatique comprenant des fibres synthétiques en polymère thermoplastique.

Dans la présente description de l'invention, on entend :
- par "matériau textile" ou "textile", tout matériau réalisé à partir de fibres ou de filaments ainsi que tout matériau formant une membrane poreuse caractérisée par un rapport longueur/épaisseur d'au moins 300 ;
- par "fibre", toute matière synthétique ou naturelle, caractérisée par un rapport longueur/diamètre d'au moins 300 ;
- par "filament", toute fibre de longueur infinie.

Parmi les textiles, on trouve notamment des mats de fibres (pansements, filtres, feutre), des mèches (pansements), des fils (fils à coudre, fils à tricoter, fils à tisser), des tricots (rectilignes, circulaires, "fullyfashioned" ou façonnés), des tissus (tissu traditionnel, tissu Jacquard, tissu multiple, tissu double face, tissu multiaxial, tissu 2D et demi, tissu 3D) et bien d'autres.

Les textiles sont classés en trois catégories suivant leur activité face aux bactéries :
- un textile est dit "neutre" lorsqu'il ne présente aucune activité particulière, les bactéries se développant normalement sur ce textile ;
- un textile est dit "bactériostatique" si les bactéries se développent très lentement mais ne meurent pas sur ce textile ;
- un textile est dit "bactéricide" si les bactéries meurent au contact du textile.

### Technique antérieure

Les fibres synthétiques en polymère thermoplastique actuellement utilisées pour fabriquer des textiles à effet bactériostatique sont intrinsèquement neutres. Il est donc nécessaire de modifier ces fibres ou les textiles obtenus à partir de ces fibres pour qu'ils acquièrent une activité face aux bactéries. Les procédés utilisés consistent, soit à effectuer un traitement chimique de surface du textile, soit à ajouter un additif actif sur les bactéries ou un agent antibactérien à la matrice des fibres. Les agents antibactériens couramment utilisés sont le sulfure de zinc ZnS, les sels d'argent, les ions argent, les sels d'acide sulfurique tels que Al₂(SO₄)_{3,} ZnO, KAl(SO₄)₂, ZnSO₄, les sels d'ammonium quaternaire, triclosan, chitosan, etc.

Le document US 2005/0255078 décrit une fibre déodorante comprenant une résine thermoplastique et un oxyde complexe d'au moins deux métaux choisis parmi les métaux divalents ou trivalents, parmi lesquels on peut citer Al₂O₃, Fe₂O₃, Ce₂O₃, CuO et ZnO.

Ces techniques actuelles ont plusieurs inconvénients. Elles nécessitent au moins une étape de production supplémentaire pour le traitement de surface et/ou l'ajout en masse d'un additif antibactérien. De plus, ces techniques peuvent modifier la souplesse et le toucher du textile. Enfin, la plupart des agents actifs sur les bactéries sont nocifs pour l'environnement (sels d'argent, sels de zinc).

Par ailleurs, les consommateurs sont de plus en plus attirés par les produits textiles issus de procédés de synthèse non dépendants de matière première d'origine fossile, mais utilisant plutôt des matières premières d'origine renouvelable ou bio-ressourcées, qui ont un impact réduit sur l'environnement et qui ont aussi la réputation d'être plus compatibles pour la peau.

La présente invention a donc pour but de fournir des matériaux textiles bactériostatiques fabriqués par un procédé simple, présentant le moins d'étapes possibles, qui n'altère ni la souplesse ni la douceur des textiles, et qui, au lieu d'utiliser des agents nocifs pour l'environnement, utilise plutôt des matières premières bio-ressourcées.

De manière surprenante, la Demanderesse a montré que l'utilisation d'un polyamide 11 particulier permettait de fabriquer de tels matériaux textiles bactériostatiques.

### Résumé de l'invention

En préambule, il est précisé que les expressions "compris(e) entre" et "allant de", qui sont utilisées dans la suite de cette description, doivent s'entendre comme incluant les bornes citées.

La présente invention a donc pour objet l'utilisation de polyamide 11 fabriqué à partir de matières premières d'origine végétale pour la fabrication d'un matériau textile bactériostatique, ledit polyamide 11 ayant une viscosité inhérente comprise dans la gamme allant de 0,5 à 1,7 et ne comprenant pas d'impuretés de diamètre supérieur à 5 µm.

Le polyamide 11 a une viscosité inhérente avantageusement comprise entre 0,5 à 1,5, de préférence entre 0,8 à 1,2 et, plus préférentiellement, sensiblement égale à 1.

Avantageusement, ledit matériau se présente sous la forme d'une membrane poreuse, d'un textile tissé ou d'un textile non tissé.

Avantageusement, ledit matériau comprend des fibres et/ou des filaments et/ou des particules à base dudit polyamide 11.

Avantageusement, lesdites fibres et/ou lesdits filaments présentent une surface lisse.

La présente invention a également pour objet un textile bactériostatique caractérisé en ce qu'il comprend du polyamide 11 de viscosité inhérente comprise dans la gamme allant de 0,5 à 1,7 et ledit polyamide 11 ne comprend pas d'impuretés de diamètre supérieur à 5 µm.

Ce polyamide 11 a une viscosité inhérente avantageusement comprise entre 0,5 à 1,5, de préférence entre 0,8 à 1,2 et, plus préférentiellement, sensiblement égale à 1.

Avantageusement, la teneur massique en polyamide 11 représente au moins 50%, de préférence au moins 80%, de la masse totale du textile.

Avantageusement, ledit polyamide 11 est en mélange avec au moins une charge et/ou au moins un pigment et/ou au moins un additif.

Avantageusement, ledit textile ne comprend pas d'additif actif sur les bactéries ni de traitement de surface actif sur les bactéries, autres que le polyamide 11.

Avantageusement, ledit textile comprend des fibres synthétiques obtenues à partir de matières premières bio-ressourcées.

Avantageusement, ledit textile comprend en outre des fibres naturelles, telles que du coton, de la laine et/ou de la soie, des fibres artificielles fabriquées à partir de matières premières naturelles, des fibres minérales, telles que des fibres de carbone, de verre, de silice et/ou de magnésium, et/ou des fibres synthétiques autres que des fibres de PA 11.

Avantageusement, le textile selon l'invention est fabriqué uniquement à partir de matières premières bio-ressourcées.

Avantageusement, le textile selon l'invention constitue un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile et/ou un agrotextile.

La présente invention a encore pour objet l'utilisation d'un textile tel que défini précédemment dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

### Description détaillée de l'invention

La présente invention a donc pour objet l'utilisation de polyamide 11 pour la fabrication d'un matériau textile bactériostatique, ledit polyamide 11 ayant une viscosité inhérente comprise dans la gamme allant de 0,5 à 1,7, avantageusement de 0,5 à 1,5, de préférence de 0,8 à 1,2 et, plus préférentiellement, sensiblement égale à 1. En outre, ce polyamide 11 ne comprend pas d'impuretés de diamètre supérieur à 5 µm.

Le polyamide 11 (abrégé "PA11") est fabriqué à partir de matières premières d'origine végétale. Les matières végétales présentent l'avantage de pouvoir être cultivées en grande quantité, selon la demande, sur la majeure partie du globe terrestre et d'être bio-ressourcées. Une matière première bio-ressourcée est une ressource naturelle, animale ou végétale, dont le stock peut se reconstituer sur une période courte à l'échelle humaine. Il faut en particulier que ce stock puisse se renouveler aussi vite qu'il est consommé.

Le PA11 est produit par la société Arkema. Il existe toute une gamme de produits à base de PA 11, sous le nom commercial de Rilsan® 11 ou Rilsan® B. La matière première de base du PA11 est l'huile de ricin ("Castor oil" en anglais), extraite de la plante du même nom (le Ricin commun), à partir des graines de ricin. Le PA11 est obtenu par polycondensation de l'acide amino-11-undécanoïque. Classiquement, des poudres de PA11 sont obtenues par un procédé de broyage d'un prépolymère de PA11.

Le PA11 selon l'invention a une viscosité inhérente comprise dans la gamme allant de 0,5 à 1,7, avantageusement de 0,5 à 1,5, de préférence de 0,8 à 1,2 et, plus préférentiellement, sensiblement égale à 1. En dehors de ces gammes de viscosité inhérente, le polyamide 11 peut difficilement être mis en oeuvre pour la fabrication de textiles.

Dans la présente description, toutes les viscosités du PA11 sont mesurées selon la méthode ARKEMA : la viscosité inhérente est mesurée à une concentration en polyamide de 0,5% en poids en solution dans du métacrésol sur le poids total de la solution, à 20°C, au moyen d'un viscosimètre Ubbelohde.

Le PA11 utilisé dans la présente invention ne comprend pas d'impuretés de diamètre supérieur à 5 µm. En effet, les impuretés présentes dans le PA11 couramment produit empêchent l'obtention de fibres ou de filaments car la matière du PA11 casse au niveau de ces impuretés au lieu de former un jonc continu. Le procédé de fabrication usuel de PA11 doit donc être modifié pour soustraire ces impuretés du PA11, par exemple à l'aide d'un tamis ou d'un filtre adapté.

Avantageusement, ledit polyamide 11 est en mélange avec au moins une charge et/ou au moins un pigment et/ou au moins un additif.

La matrice polymérique du PA11 peut notamment comprendre des additifs, de préférence de diamètre ne dépassant pas 5 µm, pour la même raison que celle évoquée précédemment. Lesdits additifs peuvent être, par exemple, des charges de renfort, des ignifugeants, des agents protecteurs contre les UV, des stabilisants aux UV, des stabilisants thermiques, des pigments, des lubrifiants, des agents antioxydants, des agents d'amélioration de la fluidité, des agents d'amélioration de la coulabilité, des agents filmogènes, des auxiliaires de filmification, des gommes, des polymères semi-cristallins, des conservateurs et leurs mélanges. Bien entendu, tout autre type d'additifs utilisés dans le domaine du textile est également envisageable.

Avantageusement, ledit textile ne comprend pas d'additif actif sur les bactéries, ni de traitement de surface actif sur les bactéries, autres que le polyamide 11. En effet, l'utilisation de PA11 selon l'invention suffit à apporter des propriétés bactériostatiques au textile qui le comprend.

La présente invention concerne notamment l'utilisation dudit PA11 pour la fabrication de matériaux textiles, tels que des fils, fibres, filaments, films, membranes, membranes poreuses, textiles tissés ou non tissés. La présente invention concerne aussi la fabrication et l'utilisation de particules de PA11 fondues pour les faire adhérer à la surface de matériaux textiles de façon durable (résistance aux lavages).

Ledit PA11 ou les compositions de matrice thermoplastique à base du dit PA11 peuvent être mis(es) en forme de matériau textile directement après la polymérisation, sans étapes intermédiaires de solidification et de refonte. Ce PA11 ou ces compositions peuvent aussi être mis(es) en forme de granulés, destinés à subir une refusion pour une mise en forme définitive ultérieure, par exemple pour la fabrication d'articles textiles moulés ou pour la fabrication de fils, fibres et/ou filaments.

Tous les procédés de filage en fondu peuvent être utilisés notamment en faisant passer le PA11 ou la composition de l'invention à travers des filières comprenant un ou plusieurs orifices. Pour la fabrication de fils multifilamentaires, on cite les procédés de filage ou filage-étirage ou filage-étirage-texturation intégrés ou non, quelle que soit la vitesse de filage. On peut produire les fils par filage haute vitesse, à vitesse de filage supérieure ou égale à 3000 m/min, préférentiellement supérieure ou égale a 4000 m/min. De tels procédés sont souvent désignés par les termes suivants : POY (partialy oriented yarn), FOY (fully oriented yarn), FEI (filage-étirage-intégré), HOY (higly oriented yarn avec une vitesse supérieure à 5500 m/min). Ces fils peuvent de plus être texturés, selon l'usage auquel ils sont destinés. Les fils obtenus par ces procédés conviennent tout particulièrement à la réalisation de surfaces textiles, tissées ou tricotées. Selon l'invention, la matrice polymérique thermoplastique en PA11 peut être utilisée pour la fabrication de fils monofilamentaires ou monofilaments, de fils multifilamentaires ou multifilaments, de fibres continues (en bobines) et/ou de fibres discontinues (coupées). Les fibres discontinues de PA11 conviennent particulièrement bien pour le mélange avec des fibres naturelles.

Pour les fibres individuelles ou monofilaments, les titres peuvent aller de 1,5dtex à 100dtex/filament, les titres élevés étant particulièrement bien adaptés pour les applications industrielles. Les fils multifilamentaires ont de préférence un titre inférieur ou égal à 6 dtex/filament, plus préférentiellement inférieur ou égal a 1,5 dtex/filament. Pour la fabrication de fibres, les filaments peuvent par exemple être réunis sous forme de mèche ou de nappe, directement après le filage ou en reprise, étirés, texturés ou frisés et coupés. Les fibres obtenues peuvent être utilisées pour la fabrication de non tissés ou de filés de fibres. Le PA11 ou les compositions peuvent également être utilisé(es) pour la fabrication de flocs. Les fils, fibres et/ou filaments de l'invention peuvent subir divers traitements tels que, par exemple, l'étirage en une étape continue ou en reprise, le dépôt d'ensimage, l'huilage, l'entrelacement, la texturation, le frisage, l'étirage, le traitement thermique de fixation ou de relaxation, le moulinage, le retordage et/ou la teinture. Pour la teinture, on cite en particulier les procédés de teinture en bain ou par jets. Les teintures préférées sont les teintures acides, métallifères ou non métallifères.

La présente invention concerne aussi un textile (ou article textile ou matériau textile) obtenu au moins partiellement à partir du PA11 défini précédemment, se présentant sous forme de fils, fibres et/ou filaments tel que définis précédemment. Ces matériaux ou articles textiles peuvent être des étoffes ou des surfaces textiles, telles que des surfaces tissées, tricotées, non-tissées ou tapis. De tels articles peuvent être, par exemple, des moquettes, des tapis, des revêtements d'ameublement, des revêtements de surface tels que les revêtements destinés aux canapés, des rideaux, de la literie, des matelas et oreillers, des vêtements et des matériaux textiles médicaux.

Le textile selon l'invention constitue avantageusement un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile et/ou un agrotextile.

Ledit textile est avantageusement utilisé dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

Le textile selon l'invention est notamment susceptible d'être utilisé dans les domaines d'utilisation décrits dans le tableau de la page A2.5 de l'Annexe intitulée "The DRA Textile Products End-Use Consumption Forecasting System" publiée en 2003 par David Rigby Associates et disponible à l'adresse internet suivante : www.davidrigbyassociates.co.uk.

La présente invention concerne aussi des articles textiles obtenus par mise en forme d'une matrice de PA11 ou d'une composition thermoplastique comprenant du PA11 selon l'invention par un procédé choisi dans le groupe comprenant un procédé d'extrusion tel que l'extrusion de feuilles et de films, un procédé de moulage tel que le moulage par compression et un procédé d'injection tel que le moulage par injection. Des films peuvent ainsi être obtenus par les procédés mentionnés précédemment en utilisant une filière plate. Les films obtenus peuvent subir une ou différentes étapes de traitements, telles qu'un étirage unidimensionnel ou bidimensionnel, un traitement thermique de stabilisation, un traitement antistatique et/ou un ensimage.

Avantageusement, la teneur massique en polyamide 11 représente au moins 50%, de préférence au moins 80%, de la masse totale du textile selon l'invention.

Avantageusement, lesdites fibres, lesdits filaments et/ou lesdits films à base de PA11 présentent une surface lisse. Il a été démontré que cela augmente l'activité bactériostatique du matériau textile comprenant ces fibres et/ou filaments.

Ces textiles selon l'invention fabriqués majoritairement à base de PA11 (comprenant au moins 50% en masse de PA11) ont en outre d'autres propriétés avantageuses. Ils sont légers, souples, au toucher doux, ils résistent à la déchirure, à la coupure, à l'abrasion, au boulochage, et ils présentent un premier contact froid.

Avantageusement, ledit textile comprend en outre des fibres naturelles telles que du coton, de la laine et/ou de la soie, des fibres artificielles fabriquées à partir de matières premières naturelles, des fibres minérales telles que des fibres de carbone, de verre, de silice et/ou de magnésium, des fibres métalliques et/ou des fibres synthétiques autres que des fibres de PA11.

Avantageusement, ledit textile comprend des fibres synthétiques obtenues à partir de matières premières bio-ressourcées. De préférence, le textile selon l'invention est fabriqué uniquement à partir de matières premières bio-ressourcées.

Par matières premières d'origine renouvelable ou matières premières bio-ressourcées, on entend des matériaux qui comprennent du carbone bio-ressourcé ou carbone d'origine renouvelable. En effet, à la différence des matériaux issus de matières fossiles, les matériaux composés de matières premières renouvelables contiennent du ¹⁴C. La "teneur en carbone d'origine renouvelable" ou "teneur en carbone bio-ressourcé" est déterminée en application de la norme ASTM D 6866 (ASTM D 6866-06) et, le cas échéant, de la norme ASTM D 7026 (ASTM D 7026-04). La première norme décrit un test de mesure du ratio ¹⁴C/¹²C d'un échantillon et le compare avec le ratio ¹⁴C/¹²C d'un échantillon référence d'origine 100% bioressourcé, pour donner un pourcentage relatif de C bio-ressourcé dans l'échantillon. La norme est basée sur les mêmes concepts que la datation au ¹⁴C, mais sans faire application des équations de datation. Le ratio ainsi calculé est désigné comme le "pMC" (percent Modern Carbon). Si le matériau à analyser est un mélange de biomatériau et de matériau fossile (sans isotope radioactif), alors la valeur de pMC obtenue est directement corrélée à la quantité de biomatériau présent dans l'échantillon. La norme ASTM D 6866-06 propose plusieurs techniques de mesure de la teneur en isotope ¹⁴C, basées soit sur la LSC (Liquid Scintillation Counting) spectrométrie à scintillation liquide, soit sur l'AMS/IRMS (Accelerated Mass Spectrometry couplé avec Isotope Radio Mass Spectrometry). La méthode de mesure préférentiellement utilisée dans le cas de la présente invention est la spectrométrie de masse décrite dans la norme ASTM D6866-06 ("accelerator mass spectroscopy").

Les textiles de l'invention contenant du polyamide 11 proviennent au moins en partie de matières premières bio-ressourcées et présentent donc une teneur en carbone bio-ressourcé d'au moins 1%, ce qui correspond à un ratio isotopique de ¹²C/¹⁴C d'au moins 1,2 x 10⁻¹⁴. De préférence, les textiles selon l'invention comprennent au moins 50% en masse de carbone bio-ressourcé sur la masse totale de carbone, ce qui correspond à un ratio isotopique ¹²C/¹⁴C d'au moins 0,6.10⁻¹². Cette teneur est avantageusement plus élevée, notamment jusqu'à 100%, qui correspond à un ratio isotopique ¹²C/¹⁴C de 1,2 x 10⁻¹². Les textiles selon l'invention peuvent donc comprendre 100% de carbone bio-ressourcé ou, au contraire, résulter d'un mélange avec une origine fossile.

### Exemple

L'exemple ci-dessous, qui fait état de l'activité bactérienne de différents textiles, illustre la présente invention sans en limiter la portée.

On compare un textile fabriqué à partir d'un PA11 de l'invention avec des textiles à base d'autres matériaux habituellement utilisés dans les textiles : PA66 (ou nylon 66), polyester (PES), coton, PA6 (ou nylon 6), polypropylène (PP), soie, PLA (polyacide lactique ou polylactic acid). Le PA11 dans l'exemple selon l'invention a une viscosité inhérente sensiblement égale à 1 (selon méthode ARKEMA : 0,5 % en poids dans du métacrésol à 20°C, viscosimètre Ubbelohde).

L'ensemble des mesures de l'activité bactérienne est effectué selon la norme ISO 20743 par transfert (XP G 39-010).

### PROTOCOLE :

Eprouvette de 38 mm de diamètre.
Souches : Staphylococcus aureus

Contact pendant 1 minute de l'éprouvette sur la gélose ensemencée par un inoculum à 106 UFC/ml, sous un poids de 200 g.

A la suite de ce contact, l'inoculum présent sur le textile est récupéré à l'aide d'un liquide d'extraction. Ce liquide subit différentes dilutions qui permettent ensuite elles-même d'ensemencer de nouvelles géloses.
- lncubation : 24 h à 37°C en chambre humide
- Mesure de la population bactérienne au temps 0 h et au temps 24 h. Le comptage est réalisé manuellement.

Les résultats traduisant l'activité bactérienne sont exprimés dans le Tableau 1 ci-dessous :

Le calcul de cette activité bactérienne correspond à la différence du nombre d'UFC exprimé en log entre les temps 24 h et 0 h sur le produit traité (Δ entre -2 et +2):
- si ce calcul donne un résultat < 0, l'activité du textile est qualifiée de bactéricide ;
- si le résultat est compris dans la gamme allant de 0 à 2 (bornes comprises), l'activité du textile est qualifiée de bactériostatique ;
- si ce calcul donne un résultat > 2, le textile est classé neutre ou non actif sur les bactéries.

**Tableau 1 : Caractérisation et mesure de l'activité antibactérienne**

| **Référence** | **Composition du textile** | **Caractérisation et mesure de l'activité antibactérienne (méthode par transfert) Croissance du log(UFC/e) en 24h** |
|---|---|---|
| **Comp 1** | PA 66 MM FT 2/78/34 S//Z | 2.87 |
| **Comp 2** | Polyester FTF 1/167/96 | 2.28 |
| **Comp 3** | Coton peigné Nm 60/1 | 2.67 |
| **Comp 4** | BECOOL^{®} PA6 MM FT 2x84/48 | 2.55 |
| **Comp 5** | Polypropylène 2/70/50 FTSZ | 2.00 |
| **Comp 6** | ORGANSIN SOIE 8X20/22 | 2.67 |
| **Comp 7** | Polyester FTF 2/78/47 SZ COOLMAX® | 2.79 |
| **Comp 8** | Modal^{®} (viscose de cellulose) NM 60/1 | 2.38 |
| **Comp 9** | PLA (Polylactic acid ) FT 167F48 | 2.77 |
| **Exemple selon l'invention** | PA11 FT SZ 2/78/30 | 0.37 |

### OBSERVATIONS :

En dehors des textiles en PA11, les autres textiles ne présentent pas d'activité bactérienne. Le PA11 a un comportement bactériostatique qui est le comportement idéal recherché.

## Revendications

1. Utilisation de polyamide 11 fabriqué à partir de matières premières d'origine végétale pour la fabrication d'un matériau textile bactériostatique, ledit polyamide 11 ayant une viscosité inhérente comprise dans la gamme allant de 0,5 à 1,7 et ne comprenant pas d'impuretés de diamètre supérieur à 5 µm.

2. Utilisation selon la revendication 1, **caractérisée en ce que** le polyamide 11 a une viscosité inhérente comprise entre 0,5 et 1,5, avantageusement entre 0,8 et 1,2 et, de préférence, sensiblement égale à 1.

3. Utilisation selon la revendication 1 ou 2, **caractérisée en ce que** ledit matériau se présente sous la forme d'une membrane poreuse, d'un textile tissé ou d'un textile non tissé.

4. Utilisation selon l'une quelconque des revendications 1 à 3, **caractérisée en ce que** ledit matériau comprend des fibres et/ou des filaments et/ou des particules à base dudit polyamide 11.

5. Utilisation selon la revendication 4, **caractérisée en ce que** lesdites fibres et/ou lesdits filaments présentent une surface lisse.

6. Textile bactériostatique **caractérisé en ce qu'**il comprend du polyamide 11 fabriqué à partir de matières premières d'origine végétale, de viscosité inhérente comprise dans la gamme allant de 0,5 à 1,7 et ledit polyamide 11 ne comprend pas d'impuretés de diamètre supérieur à 5 µm

7. Textile selon la revendication 6, **caractérisé en ce que** le polyamide 11 a une viscosité inhérente comprise entre 0,5 et 1,5, avantageusement entre 0,8 et 1,2 et, de préférence sensiblement égale à 1.

8. Textile selon la revendication 6 ou 7, **caractérisé en ce que** la teneur massique en polyamide 11 représente au moins 50% de la masse totale du textile.

9. Textile selon l'une quelconque des revendications 6 à 8, **caractérisé en ce que** ledit polyamide 11 est en mélange avec au moins une charge et/ou au moins un pigment et/ou au moins un additif.

10. Textile selon l'une quelconque des revendications 6 à 9, **caractérisé en ce qu'**il ne comprend pas d'additif actif sur les bactéries, ni de traitement de surface actif sur les bactéries, autres que le polyamide 11.

11. Textile selon l'une quelconque des revendications 6 à 10, **caractérisé en ce qu'**il comprend des fibres synthétiques obtenues à partir de matières premières bio-ressourcées.

12. Textile selon l'une quelconque des revendications 6 à 11, **caractérisé en ce qu'**il comprend en outre des fibres naturelles, des fibres artificielles fabriquées à partir de matières premières naturelles, des fibres minérales, des fibres métalliques et/ou des fibres synthétiques autres que des fibres de PA 11.

13. Textile selon l'une quelconque des revendications 6 à 12, **caractérisé en ce qu'**il est fabriqué uniquement à partir de matières premières bio-ressourcées.

14. Textile selon l'une quelconque des revendications 6 à 13, **caractérisé en ce qu'**il constitue un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile et/ou un agrotextile.

15. Utilisation d'un textile selon l'une quelconque des revendications 6 à 14 dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

## Claims

1. The use of polyamide 11 produced from raw materials of vegetable origin for producing a bacteriostatic textile material, said polyamide 11 having an inherent viscosity comprised within the range extending from 0.5 to 1.7 and containing no impurities with a diameter greater than 5 µm.

2. The use as claimed in claim 1, wherein the polyamide 11 has an inherent viscosity comprised between 0.5 and 1.5, advantageously between 0.8 and 1.2 and preferably substantially equal to 1.

3. The use as claimed in claim 1 or 2, wherein said material is in the form of a porous membrane, a woven textile or a non-woven textile.

4. The use as claimed in any one of claims 1 to 3, wherein said material comprises fibers and/or filaments and/or particles based on said polyamide 11.

5. The use as claimed in claim 4, wherein said fibers and/or said filaments have a smooth surface.

6. A bacteriostatic textile which comprises polyamide 11 produced from raw materials of vegetable origin, said polyamide 11 having an inherent viscosity comprised within the range extending from 0.5 to 1.7 and containing no impurities with a diameter greater than 5 µm.

7. The textile as claimed in claim 6, wherein the polyamide 11 has an inherent viscosity comprised between 0.5 and 1.5, advantageously between 0.8 and 1.2 and preferably substantially equal to 1.

8. The textile as claimed in claim 6 or 7, wherein the content by weight of polyamide 11 represents at least 50% of the total weight of the textile.

9. The textile as claimed in any one of claims 6 to 8, wherein said polyamide 11 is mixed with at least one filler and/or at least one pigment and/or at least one additive.

10. The textile as claimed in any one of claims 6 to 9, which does not contain any additive that is active toward bacteria or any surface treatment that is active toward bacteria other than polyamide 11.

11. The textile as claimed in any one of claims 6 to 10, which comprises synthetic fibers obtained from bio-resourced raw materials.

12. The textile as claimed in any one of claims 6 to 11, which additionally contains natural fibers, artificial fibers produced from natural raw materials, inorganic fibers, metal fibers and/or synthetic fibers other than PA 11 fibers.

13. The textile as claimed in any one of claims 6 to 12, which is produced solely from bio-resourced raw materials.

14. The textile as claimed in any one of claims 6 to 13, which constitutes a felt, a filter, a film, a gauze, a cloth, a dressing, a layer, a woven fabric, a knitted fabric, an article of clothing, a garment, an article of bedding, an article of upholstery, a curtain, an automobile interior covering, a functional technical textile, a geotextile and/or an agrotextile.

15. The use of a textile as claimed in any one of claims 6 to 14 in the fields of medicine, hygiene, baggage, clothing manufacture, clothing, household equipment and goods, upholstery, carpets, automobiles, industry, notably industrial filtration, agriculture and/or building construction.

## Patentansprüche

1. Verwendung von aus Rohstoffen pflanzlichen Ursprungs hergestelltem Polyamid-11 für die Herstellung eines bakteriostatischen Textilmaterials, wobei das Polyamid-11 eine inhärente Viskosität im Bereich von 0,5 bis 1,7 aufweist und keine Verunreinigungen mit einem Durchmesser von über 5 µm enthält.

2. Verwendung nach Anspruch 1, **dadurch gekennzeichnet, dass** das Polyamid-11 eine inhärente Viskosität zwischen 0,5 und 1,5, vorteilhafterweise zwischen 0,8 und 1,2 und bevorzugt von im Wesentlichen gleich 1 aufweist.

3. Verwendung nach Anspruch 1 oder 2, **dadurch gekennzeichnet, dass** das Material in Form einer porösen Membran, einer gewebten Textilie oder einer nichtgewebten Textilie vorliegt.

4. Verwendung nach einem der Ansprüche 1 bis 3, **dadurch gekennzeichnet, dass** das Material Fasern und/oder Filamente und/oder Partikel auf Basis dieses Polyamid-11 enthält.

5. Verwendung nach Anspruch 4, **dadurch gekennzeichnet, dass** die Fasern und/oder Filamente eine glatte Oberfläche aufweisen.

6. Bakteriostatische Textilie, **dadurch gekennzeichnet, dass** sie aus Rohstoffen pflanzlichen Ursprungs hergestelltes Polyamid-11 mit einer inhärenten Viskosität im Bereich von 0,5 bis 1,7 enthält, wobei das Polyamid-11 keine Verunreinigungen mit einem Durchmesser von größer als 5 µm enthält.

7. Textilie nach Anspruch 6, **dadurch gekennzeichnet, dass** das Polyamid-11 eine inhärente Viskosität zwischen 0,5 und 1,5, vorteilhafterweise zwischen 0,8 und 1,2 und bevorzugt von im Wesentlichen gleich 1 aufweist.

8. Textilie nach Anspruch 6 oder 7, **dadurch gekennzeichnet, dass** der Massegehalt an Polyamid-11 mindestens 50% der Gesamtmasse der Textilie ausmacht.

9. Textilie nach einem der Ansprüche 6 bis 8, **dadurch gekennzeichnet, dass** das Polyamid-11 in Mischung mit mindestens einem Füllstoff und/oder mindestens einem Pigment und/oder mindestens einem Zusatzstoff vorliegt.

10. Textilie nach einem der Ansprüche 6 bis 9, **dadurch gekennzeichnet, dass** sie außer dem Polyamid-11 keinen anderen Wirkstoff gegen Bakterien und keine Oberflächenbehandlung gegen Bakterien umfasst.

11. Textilie nach einem der Ansprüche 6 bis 10, **dadurch gekennzeichnet, dass** sie synthetische, aus Rohstoffen biologischen Ursprungs hergestellte Fasern enthält.

12. Textilie nach einem der Ansprüche 6 bis 11, **dadurch gekennzeichnet, dass** sie außer den PA-11-Fasern weiterhin natürliche Fasern, künstliche, aus Rohstoffen pflanzlichen Ursprungs hergestellte Fasern, Mineralfasern, Metallfasern und/oder synthetische Fasern enthält.

13. Textilie nach einem der Ansprüche 6 bis 12, **dadurch gekennzeichnet, dass** sie ausschließlich aus Rohstoffen biologischen Ursprungs hergestellt ist.

14. Textilie nach einem der Ansprüche 6 bis 13, **dadurch gekennzeichnet, dass** es sich um einen Filz, einen Filter, einen Film, eine Gaze, einen Stoff, einen Verband, eine Lage, ein Gewebe, ein Trikot, ein Kleidungsstück, um Bekleidung, um Bettzeug, um einen Einrichtungsgegenstand, einen Vorhang, eine Fahrerkabinenauskleidung, eine funktionelle technische Textilie, eine Geotextilie und/oder eine Agrotextilie handelt.

15. Verwendung einer Textilie nach einem der Ansprüche 6 bis 14 in den Gebieten Medizin, Hygiene, Taschnerei, Konfektionswesen, Bekleidung, Haushaltsausstattung oder Haushaltswaren, Einrichtung, Teppiche, Kraftfahrzeug, Industrie, insbesondere industrielle Filtration, Landwirtschaft und/oder Bauwesen.
